# EUROPÄISCHE PATENTANMELDUNG

(11) **EP 1 933 454 A1**
(43) Veröffentlichungstag der Anmeldung: **18.06.2008**
(21) Anmeldenummer: 07024211.0
(22) Anmeldetag: 13.12.2007
(51) Int. Cl.: H02P 23/00

(54) **Verfahren zur Leistungssteuerung einer elektrischen Einrichtung**

(30) Priorität: 16.12.2006 DE 102006059580
(71) Anmelder: Becker, Henning, Dipl.-Ing., 72336 Ballingen (DE)
(72) Erfinder: Becker, Henning, Dipl.-Ing., 72336 Ballingen (DE)
(74) Vertreter: Späth, Dieter

(57) **Zusammenfassung**

Verfahren zum Erzeugen einer Impulsreihe (11) von elektrischen Impulsen mittels einer Leistungssteuerung (1), die die Leistung einer phasenstarr frequenzgesteuerten elektrischen Einrichtung (3) bestimmt, wobei die Leistungssteuerung (1) aus einer Bezugsfrequenz (15) eine Folge von lmpulsreihen (11) mit einer Gesamtzahl an Impulsen und Pausen in jeder lmpulsreihe (11) erzeugt und das Verhältnis der Anzahl der Impulse zur Anzahl der Pausen zur Leistungssteuerung wählbar ist und eine Spannungsversorgungsfrequenz (16) einer Spannungsversorgung (2) entsprechend der Impulsreihe (11) sich wiederholend ein und aus geschaltet wird. Mit dem erfindungsgemäßen Verfahren werden die Impulse und Pausen der Impulsreihe (11) im Wesentlichen gleichmäßig über die Impulsreihe (11) verteilt.

## Beschreibung

Die Erfindung betrifft ein Verfahren zur Erzeugung einer Impulsreihe von elektrischen Impulsen mittels einer Leistungssteuerung, die die Leistung einer phasenstarr frequenzgesteuerten elektrischen Einrichtung bestimmt, wobei die Leistungssteuerung aus einer Bezugsfrequenz eine Folge von Impulsreihen mit einer Gesamtzahl an Impulsen und Pausen in jeder Impulsreihe erzeugt, wobei das Verhältnis der Anzahl der Impulse zur Anzahl der Pausen zur Leistungssteuerung mit einem Steuerwert wählbar ist und eine Spannungsversorgung entsprechend der Impulsreihe sich wiederholend ein und aus geschaltet wird.

Regler für Wechselspannungen oder getaktete Gleichspannungen zur Steuerung von elektrischen Lasten sind aus dem Stand der Technik in vielfachen Ausführungsformen bekannt. Sie werden beispielsweise zur Regelung der Leuchtstärke einer Beleuchtungseinrichtung oder der Drehzahl eines Elektromotors eingesetzt. Als Prinzip für eine solche Leistungsregelung oder. Leistungssteuerung haben sich dabei unterschiedliche Verfahren durchgesetzt. Ein Verfahren für eine Leistungsregelung verwendet dabei die sogenannte Pulsweiten-Modulation. Pulsweiten-Modulation ist auch unter den Begriffen Pulsbreiten-Modulation oder Pulsdauer-Modulation bekannt.

Pulsweiten-Modulation (PWM) nennt man die Modulation eines sich periodisch wiederholenden Steuersignals in seinem Tastverhältnis bei konstanter Frequenz.

Dem entsprechende Regler zum leistungsgesteuerten Betreiben einer Last einer elektrischen Einrichtung umfassen in der Regel einen in einem Laststromkreis wirksamen Halbleiterschalter, der zwischen der Last und der Spannungsversorgung angeordnet ist, und eine Steuerung für den Halbleiterschalter, welche aufeinander folgende und durch Pausen getrennte Steuerimpulse erzeugt, die den Halbleiterschalter schalten und damit die Last pulsierend mit der Spannungsversorgung verbinden.

Da an Leistungsschaltem möglichst wenig Verlustleistung abgegeben werden soll, werden diese bevorzugt nur in zwei Kennpunkten betrieben: voll sperrend oder voll durchgeschaltet. Die Pulsweiten-Modulation ist für die Leistungssteuerung von elektrischen Einrichtungen, wie beispielsweise Elektromotoren, geeignet, da die Leistung des Elektromotors einfach über das Puls-Pausen-Verhältnis eingestellt werden kann.

Es ist bekannt, zur Leistungssteuerung eines Elektromotors eine Versorgungsspannungsfrequenz, beispielsweise die Netzfrequenz zu takten und unter Verwendung des vorgehend beschriebenen Prinzips aus der Netzfrequenz sich wiederholende Impulsreihen mit einer Gesamtzahl m von Impulsen und Pausen zu erzeugen, bei denen auf n Impulse (m-n) Pausen folgen, wobei die Anzahl der Impulse ungleich der Anzahl der Pausen ist. Dies bedeutet, dass die Netzfrequenz n Phasen an und (m-n) Phasen ausgeschaltet wird. Wird dazu die Frequenz des PWM-Signals, die zur Leistungssteuerung wählbar ist, zu niedrig gewählt, so wird die pulsierend an den Elektromotor abgegebene Energie in eine ungleichmäßige Leistung umgewandelt, was sich als ruckende Betriebsart bemerkbar macht.

Der Erfindung liegt daher die Aufgabe zu Grunde, ein Verfahren zur Leistungssteuerung einer elektrischen Einrichtung vorzuschlagen, bei dem die Verteilung der Impulse und Pausen möglichst gleichmäßig ist.

Diese Aufgabe wird erfindungsgemäß durch ein Verfahren mit den Merkmalen des Anspruchs 1 gelöst. Weitere vorteilhafte Ausgestaltungen sind den Unteransprüchen zu entnehmen.

Kern des erfindungsgemäßen Verfahrens ist, eine Spannungsversorgungsfrequenz entsprechend einer aus einer Bezugsfrequenz abgeleitenden Impulsreihe, mit einer Anzahl von Impulsen und Pausen, zu modulieren, deren Impulse und die Pausen im Wesentlichen gleichmäßig über die Impulsreihe verteilt sind. Damit wird erreicht, dass sich die Impulse und Pausen innerhalb einer Impulsreihe periodisch wiederholen, wodurch eine Last einer elektrischen Einrichtung gleichmäßig pulsierend mit elektrischer Energie versorgt wird. Dabei können die Impulse und Pausen einzeln oder als Pakete über die Impulsreihe verteilt sein. Die Länge der Impulse bzw. Pausen entspricht einer Phasenlänge der Bezugsfrequenz oder einem Vielfachen davon. Eine Länge der Impulsreihe, d.h. die Gesamtzahl der Impulse und Pausen, ist variabel, ohne die Leistung der elektrischen Einrichtung wesentlich zu beeinflussen. Das Verhältnis der Impulse zu den Pausen ist frei wählbar und als Steuerwert einstellbar, es bestimmt allein die Leistung der Last der elektrischen Einrichtung. Dabei können die Spannungsversorgungsfrequenz und die Bezugsfrequenz gleich oder verschieden sein. Für identische Frequenzen ist es möglich, die Spannungsversorgungsfrequenz zu detektieren und daraus die Bezugsfrequenz abzuleiten. Die Spannungsversorgung kann auch eine Gleichspannung sein. Eine Impulsdauer und -form und eine Pausendauer, d. h. das Tastverhältnis, brauchen zur Leistungsänderung nicht verändert zu werden.

Das erfindungsgemäße Verfahren moduliert eine Spannungsversorgung nach Art einer Pulsanzahl-Modulation und führt sie einer frequenzgesteuerten elektrischen Einrichtung als PWM-Frequenz zu. Dabei werden aus einer Impulsreihe Impulse unterdrückt. Je mehr und je öfter Impulse unterdrückt werden, desto geringer ist die elektrische Leistung. Die nicht unterdrückten Impulse sind möglichst gleichmäßig über die Impulsreihe verteilt. Die Spannungsversorgung für die elektrische Einrichtung wird dabei von einem elektrischen Schaltglied in Abhängigkeit von einem generierten Steuersignal derart getaktet, dass auf einem oder eine Anzahl von Impulsen einer Bezugsfrequenz eine oder eine Anzahl von Pausen, entsprechend der Phasenlänge der Bezugsfrequenz, folgen. Die Spannungsversorgung kann eine Gleichspannung, eine getaktete Spannung oder eine Wechselspannung sein. Die Aufzählung ist nicht abschließend. Das Steuersignal ist eine sich periodisch wiederholende Impulsreihe, die aus der Bezugsfrequenz vorzugsweise gemäß dem folgenden Ablauf generiert wird:
- Steuerwerteingabe für die Leistungssteuerung in ein Steuerwertregister,
- elektronisches Detektieren und Zählen von Bezugsfrequenzimpulsen und Fortschreibung als Bezugsimpulssumme in einem Zählerregister eines binären Zählers;
- fortlaufendes Einschreiben des Inhalts des Zählerregisters des binären Zählers unter Umkehrung der Bit-Reihenfolge in ein binäres Speicherregister;
- permanenter Vergleich des Inhalt des Speicherregisters mit dem im Steuerwertregister eingestellten Steuerwert durch einen Komparator; und
- Ein- oder Ausschalten der Spannungsversorgung für die elektrische Einrichtung in Abhängigkeit davon, ob der Steuerwert oder der Inhalt des Speicherregisters größer ist.

Mittels dem vorgehend beschriebenen Verfahren werden die Einschaltphasen über eine Einschaltdauer der elektrischen Einrichtung zeitlich geordnet und gleichmäßig verteilt. Vorteilhafterweise kann das Steuersignal ein Ausschaltsignal oder ein Einschaltsignal sein. Das Steuersignal ändert sich in Abhängigkeit von dem Inhalt des Speicherregisters und des Steuerwertregisters. Ist das Steuersignal ein Einschaltsignal, so gibt der Komparator das Ausschaltsignal für das elektrische Schaltglied aus, wenn der Inhalt des Speicherwertes größer ist als der Steuerwert, und ein Einschaltsignal, wenn dessen Inhalt kleiner ist als der Steuerwert. Ist das Steuersignal ein Ausschaltsignal, so schaltet der Komparator das elektrische Schaltglied in umgekehrter Weise. Das Speicherregister kann auch durch eine Zuführung des Inhaltes des Zählerregisters in umgekehrter Bit-Reihenfolge ersetzt sein.

Bei einer programmierten Realisierung der Erfindung muss die Bezugsimpulssumme nicht unbedingt in ein Zählerregister geschrieben und in umgekehrter Bitreihenfolge in ein Speicherregister übertragen werden, sondern es kann die Bezugsimpulssumme als binäre Zahl in umgekehrter Bit-Reihenfolge, also sozusagen von hinten nach vom anstatt von vom nach hinten gelesen, mit dem einstellbaren Steuerwert verglichen werden.

Nachfolgend wird die Erfindung anhand eines in der Zeichnung schematisch dargestellten Ausführungsbeispiels näher erläutert. Weitere vorteilhafte Merkmale der Erfindung werden in der Zeichnung und in deren Beschreibung offenbart. Es zeigen:
- Figur 1: ein Blockschaltbild einer Leistungssteuerung gemäß dem erfindungsgemäßen Verfahren;
- Figur 2: Beispiele möglicher, mit dem erfindungsgemäßen Verfahren erzeugbarer Impulsreihen; und
- Figur 3: beispielhafte Darstellungen von Registerinhalten der Leistungssteuerung gemäß Figur 1 und der entsprechenden Impulsreihen.

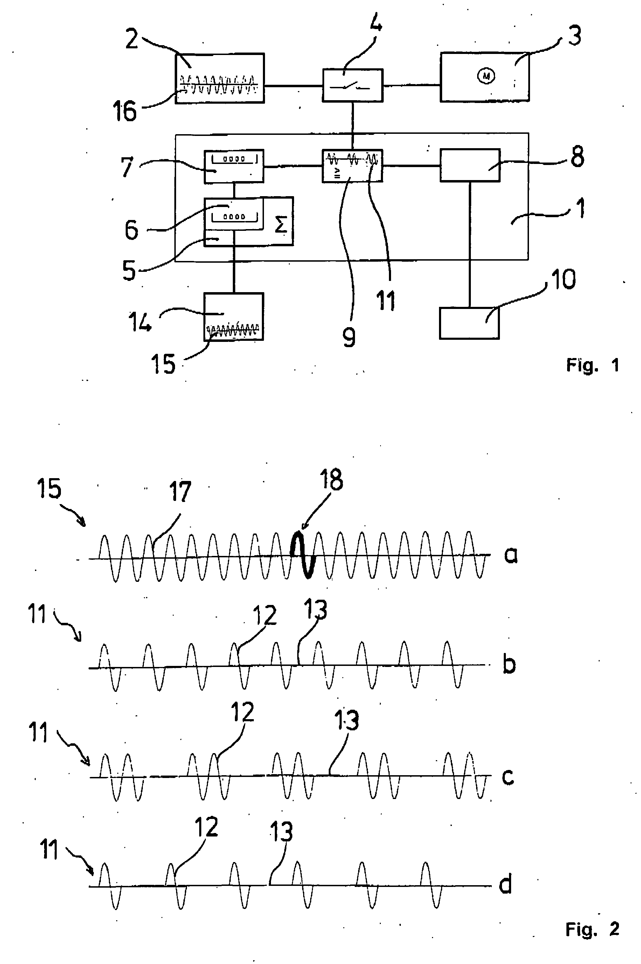

Figur 1 zeigt schematisch in einem Blockschaltbild eine Leistungssteuerung 1 unter Anwendung des erfindungsgemäßen Verfahrens. Die Leistungssteuerung 1 dient zur Pulsanzahl-Modulierung einer Spannungsversorgung 2 zur Steuerung der Leistung einer phasenstarr gesteuerten elektrischen Einrichtung 3. Zwischen der Spannungsversorgung 2 und der elektrischen Einrichtung 3 ist ein elektrisches Schaltglied 4 angeordnet, das die Spannung der Spannungsversorgung 2 in Abhängigkeit von einem von der Leistungssteuerung 1 erzeugten Steuersignal zyklisch ein- oder ausschaltet. Die elektrische Einrichtung kann beispielsweise ein Elektromotor oder eine Beleuchtung sein.

Die Leistungssteuerung 1 umfasst im Wesentlichen einen binären Zähler 5, beispielsweise einen 128-Bit-Zähler mit einem internen Zählerregister 6, ein Speicherregister 7 zum Übertragen eines konvertierten Inhalts des Zählerregisters 6, einen Steuerwertspeicher 8 zum Einstellen eines Steuerwertes und einen Komparator 9 zum Vergleich der Inhalte des Speicherregisters 7 und des Steuerwertspeichers 8. Der Speicherwert ist über ein externes Stellglied 10 in den Steuerwertspeicher 8 eingebbar.

Zur Generierung einer Folge von Impulsreihen 11, bestehend aus Impulsen 12 und Pausen 13, die gleichmäßig über die Impulsreihe 11 verteilt sind, wird eine von einem Bezugsfrequenzgenerator 14 erzeugte Bezugsfrequenz 15 gemäß dem Verfahren moduliert. Die zeitlich getaktete Bezugsfrequenz 15 wird als Impulsreihe 11 dem Schaltglied 4 als Steuersignal zugeführt. Das Schaltglied 4 schaltet die Spannungsversorgung 2 der elektrischen Einrichtung 3 entsprechend der getakteten Bezugsfrequenz 15, die sich als Impulsreihe 11 zyklisch wiederholt, und steuert damit die Leistung der elektrischen Einrichtung 3 abhängig von dem in das Steuerwertregister 8 eingegebenen Steuerwert. Das Verfahren kann als Pulsanzahl-Modulation bezeichnet werden.

Dazu werden Bezugsfrequenzimpulse 17 der Bezugsfrequenz 15 elektronisch mit dem 128-Bit-Zähler 5 gezählt und die Summe der Bezugsimpulse im Zählerregister 6 fortgeschrieben. Die Bit-Anzahl des Zählerregister 6 bestimmt die Länge der Impulsreihen 11. Der Inhalt des Zählerregisters 6 wird fortlaufend unter Umkehrung der Bit-Reihenfolge in das binäre Speicherregister 7 geschrieben, das eine dem Zählerregister 6 entsprechende Größe aufweist. Der Inhalt des Speicherregisters 7 wird permanent durch den Komparator 9 mit dem Steuerwert des Steuerwertspeichers 8 verglichen.

Der Komparator 9 gibt in Abhängigkeit von den Inhalten des Speicherregisters 7 und des Steuerwertspeichers 8 ein sich zyklisch änderndes Steuersignal an das Schaltglied 4 aus, das die Spannungsversorgungsfrequenz 16 der Spannungsversorgung 2 entsprechend der Impulsreihe 11 taktet. Das von den Impulsen 12 der Impulsreihe 11 ausgelöste Steuersignal ist beispielsweise ein Einschaltsignal, wenn der Inhalt des Speicherregisters 7 kleiner ist als der Inhalt des Steuerwertspeichers 8, und ein Ausschaltsignal, wenn dessen Inhalt größer ist als der des Steuerwertspeichers 8. Das Einschaltsignal entspricht den Impulsen 12 der Impulsreihe 11, das Ausschaltsignal deren Pausen 13.

Figur 2 zeigt drei Beispiele b, c, d von möglichen Impulsreihen 11, die mit der Leistungssteuerung 1 aus der Bezugsfrequenz 15 erzeugt sind. Die Bezugsfrequenz 15 weist eine Folge von Bezugsfrequenzphasen 18 in Form von einzelnen Bezugsfrequenzimpulsen 17 auf. Für die Impulsreihen 11 werden die Bezugsfrequenzphasen 18 zyklisch getaktet, wobei deren Amplitude, Phasenlänge und Phasenlage unverändert ist. Die zeitliche Taktung erfolgt dabei Form einer Pulsanzahlmodulation in Abhängigkeit von dem Steuerwert für die Leistungssteuerung im Steuerwertregister 8.

Im Bild b der Figur 2 wird jede zweite Bezugsfrequenzphase 18 der im Bild a dargestellten Bezugsfrequenz 15 ausgeschaltet, so dass in der Impulsreihe 11 auf einen Bezugsfrequenzphase 18 eine Pause 13 gleicher Länge folgt. Dem entsprechend folgen im Beispiel C je zwei Pausen 13 auf zwei Bezugsfrequenzphasen 18. Es ist auch möglich, wie im Beispiel d dargestellt, die Anzahl der Bezugsfrequenzphasen18 und Pausen 13 unterschiedlich zu wählen. Wichtig ist dabei, dass die Bezugsfrequenzphasen18 mit den Pausen 13 sich fortlaufend wiederholen und gleichmäßig über die Länge der Impulsreihe 11 verteilt sind.

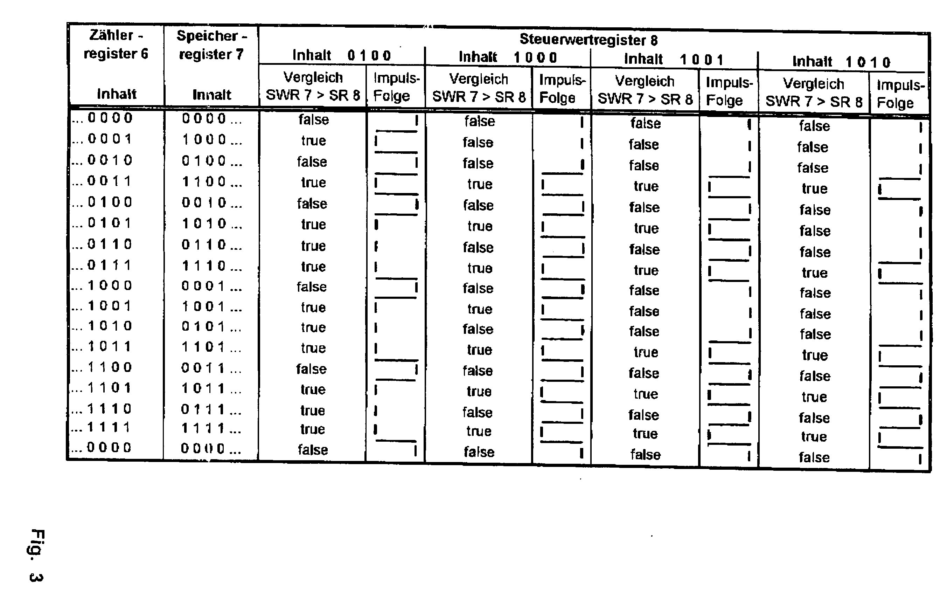

Figur 3 zeigt beispielhaft anhand einer Tabelle mit verschiedenen Inhalten des Zählerregisters 6 und des Steuerwertregisters 8 den zugeordneten Registerinhalt des Speicherregisters 7 sowie eine Wahrheitstabelle entsprechend einem Prüfungsergebnis des Komparators 9, der prüft, ob der Wert im Speicherregister 7 größer ist als der Steuerwert im Steuerwertregister 8. Abhängig von dem Wahrheitswert gibt der Komparator 9 ein Steuersignal als Aus- oder Einschaltsignal an das Schaltglied 4 aus, das jeweils in der Spalte neben dem Wahrheitswert dargestellt ist. Die zeitliche Abfolge wird von oben nach unten in der Tabelle dargestellt. Dabei wird die Bezugsimpulssumme im Zählerregister 6 als Binärzahl von Zeile zu Zeile fortgeschrieben, es wird in der Spalte 1 jeweils eine "1" zum vorangegangenen Wert addiert. Entsprechend ändert sich auch der zugeordnete Inhalt des Speicherregisters 7 laufend, der wie aus Spalte 2 ersichtlich die Bits des Zählerregisters 6 in umgekehrter Reihenfolge enthält.

Zur vereinfachten Erklärung des erfindungsgemäßen Verfahrens wird ein 4-Bit-Steuerwertregister 8 angenommen, das die Darstellung und das Verständnis erleichtert. Dem entsprechend sind in den ersten beiden Spalten der Tabelle jeweils nur die letzten bzw. ersten vier Bits von 128 Bits des Zählerregisters 6 und des Speicherregisters 7 dargestellt. Es können jedoch auch größere Steuerwerte als 0 - 15 vorgesehen sein, die in einem entsprechend größeren Steuerwertregister 8 darstellbar sind. Entsprechend der Anzahl der Bits des Steuerwertes ist die zum Vergleich heran zu ziehende Anzahl Bits des Speicherwertregisters 7 gewählt.

Am Beispiel von vier beliebig ausgewählten möglichen Steuerwerten für das Steuerwertregister 8 ist ein erster Teil der jeweiligen Impulsreihe 11 mit Impulsen 12 und Pausen 13 in der zugeordneten Spalte "Impulsfolge" dargestellt, die von oben nach unten gelesen die zeitliche Abfolge der vom Komparator 9 ausgegebenen Impulse wiedergibt. Bedingt durch den binären Zähler 5 werden die letzten vier Bits des Zählerregisters 6 beim 16. Bezugsimpuls wieder auf den Ausgangswert 0 zurück gesetzt und dann wieder aufwärts gezählt. Dadurch wiederholt sich der erste Teil der Impulsreihe 11 periodisch, bis der 128-Bit-Zähler 5 nach einem Überlauf wieder von 0 zu zählen beginnt. Die Anzahl des sich in dieser Zeit wiederholenden ersten Teils der Impulsreihe ist abhängig von der Bit-Anzahl des Steuerwertes.

Bei einem binären Steuerwert von "0100" ergibt sich beispielsweise ein in Spalte 4 dargestellter erster Teil einer Impulsreihe 11. Zwischen den ersten drei Impulsen 12 ist je eine Pause 13 angeordnet, während zwischen dem dritten und dem sechsten Impuls 12 je drei Pausen 13 aufeinander folgen. Auf den ersten Teil der Impulsreihe 11 folgen periodisch weitere Teile, die dem ersten Teil völlig entsprechen.

Durch Variation des binären Steuerwertes im Steuerwertregister 8 können eine Vielzahl unterschiedlicher Impulsreihen erzeugt werden, die sich im Puls-Pausen-Verhältnis und/oder in der Puls-Pausen-Abfolge unterscheiden. In den Spalten 6, 8, 10 der Tabelle werden andere mögliche Impulsfolgen auf der Basis binärer Steuerwerte "1 0 0 0", "1 0 0 1", "1 0 1 0" gezeigt.

Mit bevorzugten Steuerwerten können Impulsreihen 11, wie beispielsweise in Spalte 4 der Tabelle dargestellt, mit Impulsen 12 und Pausen 13 ausgegeben werden, die im Wesentlichen gleichmäßig über die Impulsreihe 11 verteilt sind. Diese takten die Spannungsversorgungsfrequenz 16 der Spannungsversorgung 2 entsprechend den Impulsen 12 der Impulsreihe 11 und versorgen die die elektrische Einrichtung 3 mit gleichmäßig pulsierender Energie. Die Spannungsversorgungsfrequenz 16 wird dabei Pulsanzahl moduliert, was eine kontinuierliche, gleich bleibende Leistungsabgabe der elektrischen Einrichtung 3 ermöglicht.

Vorstehendes Ausführungsbeispiel eignet sich insbesondere für eine Realisierung der Erfindung mittels Mikroprozessors ("festverdrahtet"). Für eine programmierte Realisierung der Erfindung kann die Bezugsimpulssumme als binäre Zahl in umgekehrter Bit-Reihenfolge mit dem einstellbaren Steuerwert verglichen werden, ohne die Bezugsimpulssumme in ein Zählerregister einzuschreiben und unter Umkehrung der Bit-Reihenfolge in ein Speicherregister zu übertragen. Zum Vergleich mit dem Steuerwert wird die Bezugsimpulssumme als binäre Zahl nicht wie üblich von vom nach hinten sondern umgekehrt von hinten nach vom, d. h. das letzte Bit zuerst und das erste Bit zuletzt, gelesen.

## Patentansprüche

1. Verfahren zum Erzeugen einer Impulsreihe (11) von elektrischen Impulsen (12) mittels einer Leistungssteuerung (1), die die Leistung einer phasenstarr frequenzgesteuerten elektrischen Einrichtung (3) bestimmt, wobei die Leistungssteuerung (1) aus einer Bezugsfrequenz (15) eine Folge von Impulsreihen (11) mit einer Gesamtzahl an Impulsen (12) und Pausen (13) in jeder Impulsreihe (11) erzeugt, wobei das Verhältnis der Anzahl der Impulse (12) zur Anzahl der Pausen (13) zur Leistungssteuerung mit einem Steuerwert wählbar ist und eine Spannungsversorgungsfrequenz (16) einer Spannungsversorgung (2) entsprechend der Impulsreihe (11) sich wiederholend ein und aus geschaltet wird, **dadurch gekennzeichnet, dass** die Impulsreihe (11) eine Anzahl von Impulsen (12) und Pausen (13) aufweist, die im Wesentlichen gleichmäßig über die Impulsreihe (11) verteilt sind.

2. Verfahren nach Anspruch 1, **dadurch gekennzeichnet, dass**
Bezugsfrequenzimpulse (17) elektronisch gezählt und in einem Zählerregister (6) eines binären Zählers (5) als Bezugsimpulssumme fortgeschrieben werden;
der Inhalt des Zählerregisters (6) fortlaufend unter Umkehrung der Bit-Reihenfolge in ein binäres Speicherregister (7) geschrieben wird;
der Inhalt des Speicherregisters (7) permanent durch einen Komparator(9) mit dem Steuerwert eines Steuerwertregisters (8) verglichen wird; und
der Komparator (9) in Abhängigkeit von dem Steuerwert ein Steuersignal für ein elektrisches Schaltglied (4) ausgibt, das eine Spannungsversorgung (2) für die elektrische Einrichtung (3) entsprechend dem Inhalt des Speicherregisters (7) zyklisch schaltet.

3. Verfahren nach Anspruch 1, **dadurch gekennzeichnet, dass**
Bezugsfrequenzimpulse (17) gezählt und als Bezugsimpulssumme als binäre Zahl (5) fortgeschrieben werden;
die binäre Zahl (5) der Bezugsimpulssumme in umgekehrter Bit-Reihenfolge mit einem Steuerwert verglichen wird; und
in Abhängigkeit davon, ob der Steuerwert größer oder kleiner als die umgekehrte Bit-Reihenfolge der Bezugsimpulssumme ist ein Steuersignal für ein elektrisches Schaltglied (4) ausgegeben wird, das eine Spannungsversorgung (2) für die elektrische Einrichtung (3) entsprechend dem Inhalt des Speicherregisters (7) zyklisch schaltet.

4. Verfahren nach Anspruch 2 oder 3, **dadurch gekennzeichnet, dass** das Steuersignal ein Ausschaltsignal ist, wenn der Inhalt des Speicherregisters (7) größer ist als der Steuerwert im Steuerwertregister (8), und ein Einschaltsignal, wenn der Inhalt des Speicherregisters (7) kleiner ist als der des Steuerwertregisters (8).

5. Verfahren nach Anspruch 2 oder 3, **dadurch gekennzeichnet, dass** das Steuersignal ein Einschaltsignal ist, wenn der Inhalt des Speicherregisters (7) größer ist als der Steuerwert im Steuerwertregister (8), und ein Ausschaltsignal, wenn der Inhalt des Speicherregisters (7) größer ist als der des Steuerwertregisters (8).
